# EUROPÄISCHE PATENTSCHRIFT

(11) **EP 2 104 057 B1**
(45) Veröffentlichungstag und Bekanntmachung des Hinweises auf die Patenterteilung: **27.07.2011**
(21) Anmeldenummer: 08004937.2
(22) Anmeldetag: 17.03.2008
(51) Int. Cl.: G06K 7/10

(54) **Vorsatz für ein Codelesegerät zum Auslesen eines optischen Codefelds und Verfahren zum Auslesen eines optischen Codefelds**
Header for a code reading device for reading an optical code field and method for reading an optical code field
Adaptateur pour un appareil de lecture de codes destiné à la lecture d'un champ de code optique et procédé de lecture d'un champ de code optique

(43) Veröffentlichungstag der Anmeldung: 23.09.2009
(73) Patentinhaber: Pepperl & Fuchs GmbH, 68307 Mannheim (DE)
(72) Erfinder: Lichtenfels, Martin, 64289 Darmstadt (DE); Weber, Wolfgang, 64297 Darmstadt (DE)
(74) Vertreter: Schiffer, Axel Martin

(56) Entgegenhaltungen:
- DE-A1- 2 520 136
- DE-A1- 3 904 052
- US-A- 5 926 556

## Beschreibung

Die Erfindung betrifft einen Vorsatz zum Umrüsten eines für die Auswertung von Rückstrahllicht ausgebildeten Codelesegerätes, welches zumindest eine Lichtquelle zum Bestrahlen eines Objekts und eine Auswerteeinheit mit einer Auswerteoptik zum Auslesen eines optischen Codefelds auf dem Objekt aufweist, für eine Durchlichtauswertung, bei der das Codefeld durchleuchtet wird und das nach dem Durchtritt verbleibende Restlicht erfasst wird. Die Erfindung betrifft ferner ein Verfahren zum Auslesen eines optischen Codefelds an einer transparenten Wand eines Objekts.

Die genannten Codelesegeräte sind bekannt und werden beispielsweise von der Firma Pepperl + Fuchs GmbH, Mannheim, unter der Bezeichnung "Datamatrix-Handheld MAH300" vertrieben. Diese Codelesegeräte weisen LED-Lichtquellen zum Beleuchten eines optischen Codefelds auf. Licht, welches vom beleuchteten optischen Codefeld zum Codelesegerät zurückgestrahlt wird, wird von einer Auswerteoptik aufgefangen. Mittels einer Auswerteeinheit wird aus dem zurückgesandten Licht der Informationsgehalt des optischen Codefelds bestimmt.

Aus der WO 00/11593 A ist eine Bildaufnahmevorrichtung bekannt, mit der sowohl der Inhalt als auch die Codierung einer Petrischale im Auflicht bestimmt werden können. Gemäß der Lehre dieser Druckschrift wird die Petrischale in einer Vertiefung mit einer kegelstumpfförmigen Wand angeordnet, die eine Beleuchtung und Betrachtung der zylindrischen Randbereiche der Petrischale mit der Codierung ermöglicht.

Die WO 2004/023209 A betrifft eine optischen Anordnung, die zum Auslesen einer Retikelcodierung ausgebildet ist, welche auf versetzten Oberflächenbereichen angebracht ist.

Die DE 25 20 136 A1 betrifft ein Verfahren und eine Vorrichtung zur Identifikation einer Flasche, die für einen Laserstrahl transparent ist, und die entlang eines Teils ihrer Bodenwand mit Marken versehen ist. Dabei ist vorgesehen, dass ein Laserstrahl auf die Marken gerichtet wird, während entweder der Strahl oder die Flasche gedreht wird, dass der Laserstrahl bei Fehlen der Marken direkt durch die Bodenwand hindurchgeleitet wird, dass der Laserstrahl bei Vorhandensein der Marken an den Marken gestreut und aufgespreizt wird, und dass das Vorhandensein oder Fehlen der Aufspreizung des Strahls festgestellt und ein elektrisches Signal erzeugt wird, das die Flasche identifiziert.

Die US 5,926,556 betrifft ein System zur Identifizierung von Behältern, welche Identifikationsmuster aufweisen. Dabei ist vorgesehen, dass eine Kamera ein Bild eines Abschnittes des Behälters erzeugt, welcher das Identifikationsmuster aufweist. Der Behälter wird hierzu zwischen der Kamera und einer Lichtquelle angeordnet.

Die DE 39 04 052 A1 beschreibt eine Vorrichtung mit Beleuchtung zur Erzeugung eines Lichtbalkens zum Zwecke der Abtastung einer ebenen Fläche. Dabei ist vorgesehen, dass ein über die abzutastende Breite der ebenen Fläche sich erstreckender photoelektrischer Liniensensor aus einzelnen Photoelementen zusammengesetzt eine Sensoreinheit bildet, die den Lichtbalken erfasst, und gegenüber oder parallel einer ebenen, plattenförmigen Licht-Kondensator-Einheit angeordnet ist. Die Licht-Kondensator-Einheit enthält eine Fluoreszenzplatte, die nur auf einer ihrer Schmalseiten für den Lichtaustritt ausgebildet ist. Das Prinzip der plattenförmigen Lichtkondensator-Einheit soll sowohl in Lichttransmission als auch in Reflexion anwendbar sein.

**Aufgabe** der Erfindung ist es, das Einsatzspektrum eines bekannten Codelesegeräts zu erweitern.

Die Aufgabe wird erfindungsgemäß durch einen Vorsatz für ein Codelesegerät mit den Merkmalen des Anspruchs 1 und ein Verfahren mit den Merkmalen des Anspruchs 15 gelöst. Bevorzugte Ausführungsbeispiele sind in den jeweils abhängigen Ansprüchen angegeben.

Nach der Erfindung ist ein Vorsatz zum Umrüsten eines für die Auswertung von Rückstrahllicht ausgebildeten Codelesegerätes, welches zumindest eine Lichtquelle zum Bestrahlen eines Objekts und eine Auswerteeinheit mit einer Auswerteoptik zum Auslesen eines optischen Codefelds auf dem Objekt aufweist, für eine Durchlichtauswertung vorgesehen, bei der das Codefeld durchleuchtet wird und das nach dem Durchtritt verbleibende Restlicht erfasst wird. Der erfindungsgemäße Vorsatz weist auf: Anschlussmittel zum Herstellen einer ausgerichteten Verbindung mit dem Codelesegerät, eine Umlenkeinrichtung, die dafür eingerichtet und positioniert ist, Licht umzulenken, welches bei angeschlossenem Codelesegerät von der Lichtquelle des Codelesegeräts ausgeht, und einen Freiraum zur Aufnahme zumindest des Codefelds, wobei die Umlenkeinrichtung dafür eingerichtet und positioniert ist, Licht, welches bei angeschlossenem Codelesegerät von der Lichtquelle des Codelesegeräts ausgeht, für eine Durchlichtauswertung des Codefelds zur Auswerteoptik des angeschlossenen Codelesegeräts zurückzulenken, und wobei der Freiraum so positioniert ist, dass er bei angeschlossenem Codelesegerät zwischen der Umlenkeinrichtung und der Auswerteoptik liegt, so dass das Codefeld mit Licht durchleuchtet wird, welches aus der Umlenkeinrichtung austritt, oder wobei der Freiraum so positioniert ist, dass er bei angeschlossenem Codelesegerät zwischen der Lichtquelle und der Umlenkeinrichtung liegt, so dass in die Umlenkeinrichtung eintretendes Licht Informationen über das durchleuchtete Codefeld enthält.

Ein Grundgedanke der Erfindung kann in einem Vorsatz gesehen werden, mit dem ein bekanntes und ursprünglich für die Auswertung von Rückstrahllicht ausgebildetes Codelesegerät für eine Durchlichtauswertung umgerüstet werden kann. Eine derartige Durchlichtauswertung ist insbesondere für das Auslesen von optischen Codefeldern auf einem gläsernen Untergrund vorteilhaft, da in diesem Fall ein Auswerten des Rückstrahllichtes durch Reflexionen am gläsernen Untergrund erschwert sein kann.

Zum Umrüsten des Codelesegeräts ist nach der Erfindung ein Vorsatz vorgesehen, der das eigene Licht des Codelesegeräts mittels einer Umlenkeinrichtung umlenkt und in die Auswerteoptik des Codelesegeräts zurückstrahlen lässt. Das Objekt mit dem Codefeld kann dann beispielsweise zwischen der Umlenkeinrichtung und der Auswerteoptik eingesetzt werden, so dass das optische Codefeld von dem aus der Umlenkeinrichtung austretenden, zurückgelenkten Licht durchschienen wird, und die Auswerteeinheit auf Grundlage des Lichtes, welches das Codefeld durchdringt, die Codierung des Codefelds erkennen kann.

Beispielsweise kann die Erfindung in der Labortechnik eingesetzt werden. Bei dem Objekt handelt es sich vorzugsweise um ein zumindest im Bereich des Codefelds transparentes Objekt, insbesondere um ein Gefäß, vorzugsweise um ein Glasgefäß. Beispielsweise kann es sich bei dem Objekt um eine Petrischale handeln. Der erfindungsgemäße Vorsatz ermöglicht ein Durchlicht-Auslesen von Codierungen, die am zylindrischen Rand einer solchen Petrischale angebracht sind.

Bei dem optischen Codefeld kann es sich insbesondere um einen zweidimensionalen Barcode, beispielsweise eine Datamatrix, oder/und um einen eindimensionalen Barcode handeln. Das Codefeld kann auch ein Hologramm beinhalten. Das optische Codefeld kann beispielsweise in das Objekt schwarz eingebrannt sein. Zum Auslesen des optischen Codefelds weist die Auswerteeinheit geeigneterweise eine Bilderkennungseinheit, insbesondere eine Datenverarbeitungseinrichtung mit einer Bilderkennungssoftware auf.

Bei dem Codelesegerät handelt es sich zweckmäßigerweise um ein tragbares Codelesegerät, insbesondere um ein Handheld-Codelesegerät. Die Lichtquellen des Codelesegeräts können beispielsweise als Leuchtdioden ausgebildet sein.

Besonders vorteilhaft ist nach der Erfindung, dass die Umlenkeinrichtung dafür eingerichtet und positioniert ist, Licht, welches bei angeschlossenem Codelesegerät von der Lichtquelle des Codelesegeräts ausgeht, für die Durchlichtauswertung des Codefelds um zumindest annähernd 180° umzulenken. Dies ist insbesondere dann von Vorteil, wenn die optischen Achsen der Lichtquelle und der Auswerteoptik zumindest annähernd parallel zueinander verlaufen. Zweckmäßigerweise lenkt die Umlenkeinrichtung das Licht um einen Winkel um, der 180° abzüglich der Winkeldifferenz zwischen den optischen Achsen der Lichtquelle und der Auswerteoptik des Codelesegeräts beträgt.

Ein konstruktiv besonders einfacher Vorsatz wird dadurch erhalten, dass der Freiraum, der zur Aufnahme zumindest des Codefelds vorgesehen ist, so positioniert ist, dass er bei angeschlossenem Codelesegerät zwischen der Umlenkeinrichtung und der Auswerteoptik liegt. Gemäß dieser Erfindungsalternative wird das Codefeld mit dem Licht durchleuchtet, welches aus der Umlenkeinrichtung austritt. Alternativ oder zusätzlich ist es erfindungsgemäß möglich, den Freiraum zur Aufnahme zumindest des Codefelds so zu positionieren, dass er bei angeschlossenem Codelesegerät zwischen der Lichtquelle und der Umlenkeinrichtung liegt. Gemäß dieser Erfindungsalternative enthält bereits das in die Umlenkeinrichtung eintretende Licht Informationen über das Codefeld.

Weiterhin ist es besonders vorteilhaft, dass die Umlenkeinrichtung zumindest einen Lichtwellenleiter aufweist. Mittels eines derartigen Lichtwellenleiters können einerseits unerwünschte Reflexionen und Streuungen verhindert werden. Andererseits kann der Lichtwellenleiter den Vorsatz mechanisch stabilisieren. Der Lichtwellenleiter weist bevorzugt Plexiglas auf.

Insbesondere kann vorgesehen sein, dass die Umlenkeinrichtung zumindest zwei, vorzugsweise parallel verlaufende Lichtwellenleiter aufweist. Hierdurch wird eine besonders zuverlässige Lichtführung ermöglicht. Sofern zumindest zwei, insbesondere parallel verlaufende Lichtwellenleiter vorgesehen sind, ist es zweckmäßig, dass ein erster Lichtwellenleiter zur Übertragung von Licht eingerichtet und positioniert ist, welches von der Lichtquelle des angeschlossenen Codelesegeräts abgestrahlt wird, und dass ein zweiter Lichtwellenleiter zur Übertragung von Licht eingerichtet und positioniert ist, welches zur Auswerteoptik eines angeschlossenen Codelesegeräts zurückgelenkt ist. In diesem Fall dient der erste Lichtwellenleiter zur Führung der vom Codelesegerät hinweg verlaufenden Lichtstrahlen, und der zweite Lichtwellenleiter zur Führung der umgelenkten, zum Codelesegerät hin gerichteten Lichtstrahlen. Da gemäß dieser Ausführungsform sowohl das hinlaufende als auch das rücklaufende Licht geführt ist, ist eine besonders wirkungsvolle Beleuchtung des Codefelds möglich.

Zweckmäßigerweise sind die beiden Lichtwellenleiter über einen optischen Umlenkkörper, beispielsweise einen Halbzylinder oder ein Prisma, miteinander verbunden. Der Umlenkkörper kann einerseits die Lichtumlenkung, zum Beispiel um 180° bewirken, und andererseits die beiden Lichtwellenleiter mechanisch miteinander verbinden.

Die beiden Lichtwellenleiter können grundsätzlich auch einstückig ausgebildet sein. Auch kann zumindest ein Lichtwellenleiter einstückig mit dem optischen Umlenkkörper ausgebildet sein. Bevorzugt ist es jedoch, dass die beiden Lichtwellenleiter und/oder der optische Umlenkkörper separate Bauteile sind, die gegebenenfalls nachträglich miteinander verbunden wurden, da dies den Herstellungsaufwand verringern kann.

Sofern zwei Lichtwellenleiter vorgesehen sind, ist es besonders bevorzugt, dass die beiden Lichtwellenleiter, insbesondere an ihren Seitenflächen, aneinander anliegen. Hierdurch kann die Bildung unerwünschter Hohlräume vermieden werden, die unter Umständen den Reinigungsaufwand erhöhen könnten.

Weiter ist es besonders bevorzugt, dass zumindest einer der Lichtwellenleiter plattenförmig ausgebildet ist. Insbesondere kann der Lichtwellenleiter zumindest annähernd quaderförmig ausgebildet sein, wobei Abweichungen von der Quaderform insbesondere im Einkoppelbereich und/oder im Auskoppelbereich des Lichtwellenleiters bestehen können. Vorzugsweise ist zumindest einer der Lichtwellenleiter stabförmig ausgebildet.

Eine weitere bevorzugte Ausführungsform der Erfindung besteht darin, dass zumindest einer der Lichtwellenleiter, insbesondere lichteingangsseitig, also im Einkoppelbereich, eine Abdeckung, vorzugsweise zum Abschirmen von Auskoppellicht, aufweist. Mittels einer solchen Abdeckung kann verhindert werden, dass Licht, welches steiler als der kritische Winkel der Totalreflexion im Lichtwellenleiter verläuft, und welches daher aus den Seitenflächen des Lichtwellenleiters ausgekoppelt wird, zum Objekt und/oder zum Codefeld gelangt und dort unter Umständen unerwünschte Reflexionen verursacht. Insbesondere kann die Abdeckung an demjenigen Lichtwellenleiter vorgesehen sein, der zur Übertragung von Licht dient ist, welches von der Lichtquelle des angeschlossenen Codelesegeräts hinweg verläuft, also an demjenigen Lichtwellenleiter, der das Licht führt, welches noch nicht umgelenkt ist. Grundsätzlich kann die Abdeckung vom fraglichen Lichtwellenleiter beabstandet sein. Besonders bevorzugt ist es jedoch, dass die Abdeckung auf einer Oberfläche des Lichtwellenleiters angeordnet ist, beispielsweise aufgeklebt ist, wodurch eine besonders hohe mechanische Stabilität gegeben ist. Zweckmäßigerweise ist die Abdeckung zwischen dem Freiraum, der zur Aufnahme zumindest des Codefelds vorgesehen ist, und dem Lichtwellenleiter positioniert.

Besonders bevorzugt ist es, dass die Umlenkeinrichtung einen als Halbzylinder ausgebildeten optischen Umlenkkörper aufweist. Ein solcher Halbzylinder kombiniert eine wirksame Lichtumlenkung mit einem geringen Fertigungsaufwand. Grundsätzlich sind aber auch andere Formgestaltungen der Umlenkeinrichtung denkbar, so beispielsweise ein Prisma oder ein allgemeiner Zylinderabschnitt, insbesondere Zylindersektor. Für eine besonders stabile Verbindung bestehen Lichtwellenleiter und Umlenkeinrichtung bevorzugt aus demselben Material. Zweckmäßigerweise bestehen die Umlenkeinrichtung und/oder die Lichtwellenleiter aus Plexiglas.

Weiterhin ist es besonders vorteilhaft, dass der Umlenkkörper und/oder zumindest einer der Lichtwellenleiter eine Oberflächenbeschichtung, beispielsweise eine Lackierung aufweist. Hierdurch kann die Lichtführung weiter verbessert werden. Zweckmäßigerweise ist zumindest eine Oberfläche zumindest eines der Lichtwellenleiter und/oder des Umlenkkörpers glatt ausgebildet.

Insbesondere um eine besonders homogene Bestrahlung des Codefelds zu gewährleisten, was eine Erkennung des optischen Codefelds erleichtern kann, ist es zweckmäßig, dass die Umlenkeinrichtung, insbesondere lichtausgangsseitig, einen Diffusor aufweist. Der Diffusor ist zweckmäßigerweise stirnseitig am Lichtwellenleiter angeordnet, der zur Übertragung des zur Auswerteoptik zurückgestrahlten Lichts vorgesehen ist. Zweckmäßigerweise ist der Diffusor mit einem Lichtwellenleiter verbunden.

Weiterhin ist es vorteilhaft, dass der Vorsatz zumindest ein optisches Element aufweist, welches so positioniert ist, dass es bei angeschlossenem Codelesegerät vor der Auswerteoptik des Codelesegeräts angeordnet ist. Bei dem optischen Element kann es sich insbesondere um eine Linse, vorzugweise um eine Sammellinse handeln. Das optische Element ermöglicht eine Anpassung der Auswerteoptik des Codelesegeräts im Hinblick auf den erfindungsgemäßen Durchlichtbetrieb. Vorzugsweise ist der Freiraum zur Aufnahme zumindest des Codefelds zwischen dem Diffusor und dem optischen Element vorgesehen.

Die Betriebszuverlässigkeit kann weiter dadurch erhöht werden, dass zumindest eine Abdeckung zum Abdecken zumindest einer nicht benötigten Lichtquelle des Codelesegeräts vorgesehen ist. Mittels dieser Abdeckung können Lichtquellen des Codelesegeräts, welche lediglich für den Reflexionsbetrieb und nicht für den erfindungsgemäßen Durchlichtbetrieb benötigt werden, und welche im erfindungsgemäßen Durchlichtbetrieb möglicherweise unerwünschte Reflexionen verursachen könnten, abgeblendet werden. Zweckmäßigerweise ist die Abdeckung an den Anschlussmitteln für das Codelesegerät angeordnet, so dass ein Abblenden in der unmittelbaren Nähe des Codelesegeräts erfolgen kann.

Insbesondere im Hinblick auf die mechanische Stabilität ist es besonders vorteilhaft, dass die Anschlussmittel eine hülsenförmige Aufnahme für das Codelesegerät aufweisen. Mittels einer solchen hülsenförmigen Aufnahme kann das Codelesegerät in besonders einfacher Weise am Vorsatz gesichert werden.

Vorzugsweise weisen die Anschlussmittel zumindest eine formschlüssige oder/und kraftschlüssige Halteeinrichtung für das Codelesegerät auf. Eine formschlüssige Halteeinrichtung kann zum Beispiel als Rastelement ausgebildet sein. Als kraft- und/oder formschlüssige Halteeinrichtung kann beispielsweise auch zumindest eine Sicherungsschraube gegeben sein. Zu Schutzzwecken kann ferner ein Schrumpfschlauch vorgesehen sein, der das Codelesegerät und/oder die Anschlussmittel zumindest teilweise umgibt.

Eine konstruktiv besonders einfache und zugleich mechanisch stabile Ausführungsform der Erfindung besteht darin, dass die Anschlussmittel eine L-winkelförmige Auflage für das Codelesegerät aufweisen. In diesem Fall können die Anschlussmittel ferner zumindest eine Schraube zum Sichern des Codelesegeräts an der Auflage aufweisen.

Das Codelesegerät selbst stellt keinen notwendigen Bestandteil der Erfindung dar. Die Erfindung umfasst aber auch ein Codelesegerät, das mit einem erfindungsgemäßen Vorsatz verbunden ist, also die Kombination aus Codelesegerät und erfindungsgemäßem Vorsatz.

Nach der Erfindung ist überdies ein Verfahren zum Auslesen eines optischen Codefelds an einer transparenten Wand eines Objekts, insbesondere eines Gefäßes, mittels eines Codelesegeräts mit einem erfindungsgemäßen Vorsatz vorgesehen. Bei diesem Verfahren wird von einer Lichtquelle eines Codelesegeräts ausgehendes Licht durch die Wand des Objekts und durch das optische Codefeld hindurch auf eine Auswerteoptik einer Auswerteeinrichtung des Codelesegeräts gestrahlt, und das optische Codefeld von der Auswerteeinrichtung auf Grundlage von Licht, welches durch das optische Codefeld hindurchtritt, ausgewertet.

Im Zusammenhang mit dem erfindungsgemäßen Verfahren genannte Merkmale können auch bei der erfindungsgemäßen Vorrichtung zum Einsatz kommen. Ebenso können im Zusammenhang mit der erfindungsgemäßen Vorrichtung genannte Merkmale beim erfindungsgemäßen Verfahren Anwendung finden.

Ein Grundgedanke des erfindungsgemäßen Verfahrens kann darin gesehen werden, ein auf einem transparenten Objekt angeordnetes Codefeld nicht im Reflexionsbetrieb, sondern im Durchlichtbetrieb auszuwerten, d.h. die transparente Wand des Objekts mit dem Codefeld zu durchleuchten und das nach dem Durchtritt verbleibende Restlicht zu erfassen und zum Bestimmen des Informationsgehalts des Codefelds heranzuziehen.

Eine bevorzugte Weiterbildung des erfindungsgemäßen Verfahrens besteht darin, dass das von der Lichtquelle des Codelesegeräts ausgehende Licht mittels einer Umlenkeinrichtung zum optischen Codefeld und zur Auswerteoptik des Codelesegeräts zurückgelenkt wird, wobei das Licht von der Umlenkeinrichtung bevorzugt um 180° umgelenkt wird. Gemäß dieser Ausführungsform können Lichtquelle und Auswerteoptik nahe beieinander liegen, so dass ein besonders kompaktes Codelesegerät verwendet werden kann.

Die Erfindung wird nachfolgend anhand bevorzugter Ausführungsbeispiele näher erläutert, die schematisch in den beigefügten Figuren dargestellt sind. In den Figuren zeigen:
- Fig. 1: eine längs geschnittene Ansicht eines Ausführungsbeispiels eines erfin- dungsgemäßen Vorsatzes, das an einem Codelesegerät befestigt ist;
- Fig. 2: eine Ansicht des Vorsatzes aus Fig. 1 von unten ohne Codelesegerät und Schrumpfschlauch;
- Fig. 3: eine Ansicht des Vorsatzes aus Fig. 1 von oben ohne Codelesegerät und Schrumpfschlauch;
- Fig. 4: eine Ansicht des Vorsatzes aus Fig. 1 von vorne (rechte Seite in Fig. 1); und
- Fig. 5: eine Ansicht des Vorsatzes aus Fig. 1 von hinten (linke Seite in Fig. 1) ohne Codelesegerät und Schrumpfschlauch.

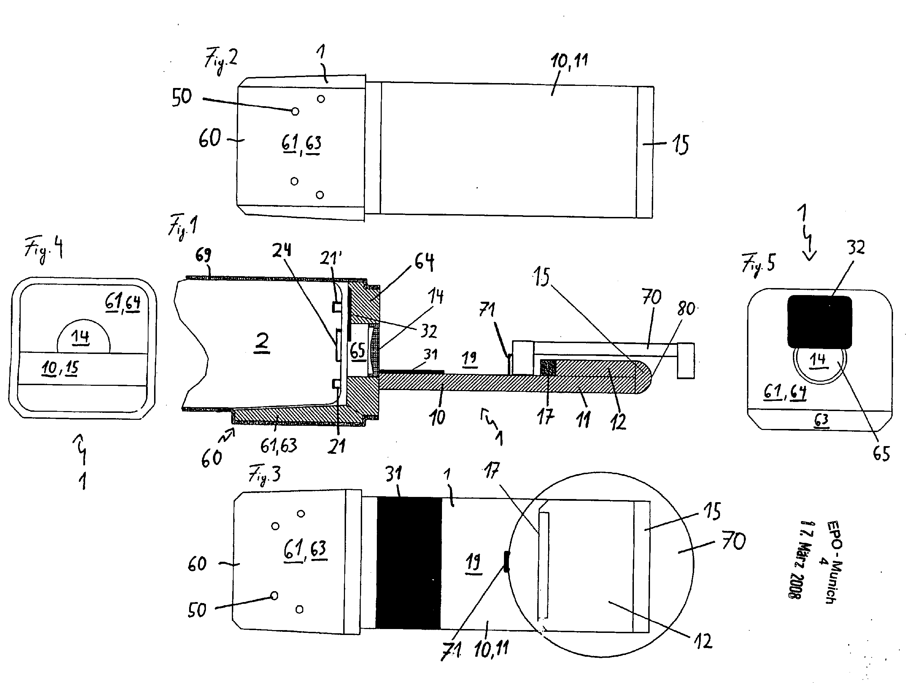

Die Figuren 1 bis 5 zeigen ein Ausführungsbeispiel eines erfindungsgemäßen Vorsatzes 1 für ein Codelesegerät 2, wobei das Codelesegerät 2 der Übersichtlichkeit halber lediglich in Fig. 1 dargestellt ist.

An der vorderen Stirnseite des Codelesegeräts 2 befinden sich eine Vielzahl von Lichtquellen, welche als Leuchtdioden ausgebildet sind, und welche eine ebenfalls stirnseitig am Codelesegerät 2 angeordnete Auswerteoptik 24 kranzartig umgeben. Von diesen Lichtquellen sind in Fig. 1 beispielhaft zwei Lichtquellen 21, 21' dargestellt.

Der Vorsatz 1 weist Anschlussmittel 60 zum Anschluss an das Codelesegerät 2 auf. Diese Anschlussmittel 60 sind mit einer L-profilförmigen Auflage 61 mit einer ersten Schenkelplatte 63 und einer zweiten Schenkelplatte 64 ausgebildet. Die erste Schenkelplatte 63 liegt dabei an einer Längsseite des aufgenommenen Codelesegeräts 2 an. Die zweite Schenkelplatte 64 ist rechtwinklig zur ersten Schenkelplatte 63 angeordnet und ist vor der Stirnseite des aufgenommenen Codelesegeräts 2 positioniert, an welcher die Lichtquellen 21, 21' und die Auswerteoptik 24 angeordnet sind. Die Anschlussmittel 60 weisen ferner vier nicht dargestellte Sicherungsschrauben auf, welche das Codelesegerät 2 an der Auflage 61 sichern. Zur Aufnahme dieser Sicherungsschrauben sind in der ersten Schenkelplatte 63 der Auflage 61 vier trapezförmig angeordnete Bohrungen 50 vorgesehen. Korrespondierende Bohrungen sind im Codelesegerät 2 vorhanden. Die Anschlussmittel 60 weisen überdies einen Schrumpfschlauch 69 auf, der die Auflage 61 und das Codelesegerät 2 umgibt.

An der zweiten Schenkelplatte 64 der Anschlussmittel 60 ist eine Umlenkeinrichtung 10 befestigt. Diese Umlenkeinrichtung 10 weist einen quaderförmigen ersten Lichtwellenleiter 11 auf, der rechtwinklig von der zweiten Schenkelplatte 64 absteht, und der vor der Lichtquelle 21 angeordnet ist, so dass die Lichtquelle 21 direkt in den Lichtwellenleiter 11 einstrahlt. An seinem dem Codelesegerät 2 und den Anschlussmitteln 60 abgewandten Ende ist am ersten Lichtwellenleiter 11 ein als Halbzylinder ausgebildeter Umlenkkörper 15 vorgesehen, an den sich wiederum ein zweiter quaderförmiger Lichtwellenleiter 12 anschließt. Wie insbesondere Fig. 1 zeigt, verläuft der zweite Lichtwellenleiter 12 parallel zum ersten Lichtwellenleiter 11 und liegt an dem ersten Lichtwellenleiter 11 an. Der Umlenkkörper 15 schließt bündig mit den beiden Lichtwellenleitern 11, 12 ab und weist somit einen Zylinderdurchmesser auf, welcher der Summe der Höhe des ersten Lichtwellenleiters 11 zuzüglich der Höhe des zweiten Lichtwellenleiters 12 entspricht. Die Zylinderachse des halbzylinderförmigen Umlenkkörpers 15 verläuft in Fig. 1 senkrecht zur Zeichenebene, das heißt senkrecht zu einer Verbindungslinie zwischen Auswerteoptik 24 und Lichtquelle 21. An seinem dem Umlenkkörper 15 abgewandten Ende weist der zweite Lichtwellenleiter 12 einen optischen Diffusor 17 auf.

In der zweiten Schenkelplatte 64 ist vor der Auswerteoptik 24 des Codelesegeräts 2 eine zylindrische Ausnehmung 65 vorgesehen. In dieser Ausnehmung 65 ist ein als Sammellinse ausgebildetes optisches Element 14 angeordnet.

Zwischen der Auskoppelseite des zweiten Lichtwellenleiters 12 und dem Diffusor 17 einerseits und dem optischen Element 14 und dem Codelesegerät 2 andererseits ist ein Freiraum 19 ausgebildet, in welchen das abzutastende Objekt 70, im dargestellten Ausführungsbeispiel eine Petrischale, mit dem Codefeld 71 eingebracht werden kann.

Beim Betrieb strahlt die Lichtquelle 21 direkt in den ersten Lichtwellenleiter 11 ein. Das abgestrahlte Licht wird im ersten Lichtwellenleiter 11 vom Codelesegerät 2 hinweggeleitet, am Umlenkkörper 15 um 180° umgelenkt und sodann im zweiten Lichtwellenleiter 12 zu den Anschlussmitteln 60 und dem Codelesegerät 2 zurückgeleitet. Am Diffusor 17 des zweiten Lichtwellenleiters 12 tritt das umgelenkte Licht aus und durchstrahlt das Codefeld 71, das im Freiraum 19 zwischen dem zweiten Lichtwellenleiter 12 und der Auswerteoptik 24 des Codelesegeräts 2 angeordnet ist. Durch das Codefeld 71 hindurchtretendes Restlicht fällt durch das optische Element 14 und die Ausnehmung 65 in der Schenkelplatte 64 auf die Auswerteoptik 24 und wird vom Codelesegerät 2 im Hinblick auf den Informationsgehalt des Codefelds 71 ausgewertet.

Wie Fig. 1 zeigt, ist der zweite Lichtwellenleiter so dimensioniert, dass er mitsamt dem Umlenkkörper 15 quer in den Innenraum des als Petrischale ausgebildeten Objekts 70 hineinpasst. Das als Petrischale ausgebildete Objekt 70 kann somit so aufgesetzt werden, dass lediglich ein einziger zylindrischer Randabschnitt zwischen dem Codelesegerät 2 und dem Diffusor 17 liegt und durchleuchtet wird.

Im Einkoppelbereich des ersten Lichtwellenleiters 11, also in dem Bereich, welcher der zweiten Schenkelplatte 64 und damit dem Codelesegerät 2 zugewandt ist, ist auf einer dem Freiraum 19 und dem zweiten Lichtwellenleiter 12 zugewandten Seitenfläche des Lichtwellenleiters 11 eine als rechteckige Abdeckplatte ausgebildete Abdeckung 31 vorgesehen. Diese Abdeckplatte verhindert, dass Licht aus dem Lichtwellenleiter 11 ausgekoppelt wird, zum Codefeld 71 gelangt und dort unerwünschte Reflexionen hervorruft.

Während Fig. 1 lediglich eine einzige Lichtquelle 21 zeigt, die zum Einstrahlen in den ersten Lichtwellenleiter 11 positioniert ist, können auch mehrere Lichtquellen zum Einstrahlen in den Lichtwellenleiter 11 vorgesehen sein. Diese können beispielweise mit Bezug auf Fig. 1 vor und/oder hinter der Zeichenebene liegen.

Im Ausführungsbeispiel der Fig. 1 weist das Codelesegerät 2 außer der Lichtquelle 21, die in den Lichtwellenleiter 11 einstrahlt, auch zumindest eine weitere Lichtquelle 21' auf, welche auf der der Lichtquelle 21 abgewandten Seite der Auswerteoptik 24 liegt. Im Gegensatz zur Lichtquelle 21 fluchtet die weitere Lichtquelle 21' nicht mit dem ersten Lichtwellenleiter 11, strahlt somit nicht in den Lichtwellenleiter 11 ein und wird folglich für die Messung in der Regel nicht benötigt. Um zu verhindern, dass diese nicht benötigte Lichtquelle 21' unerwünschte Reflexionen verursacht, ist diese Lichtquelle 21' durch eine Abdeckung 32 abgedeckt. Die Abdeckung 32 ist als etwa rechteckige Abdeckplatte ausgebildet, an der zweiten Schenkelplatte 64 angeordnet, und verläuft etwa parallel zur zweiten Schenkelplatte 64 sowie parallel zur Stirnfläche des Codelesegeräts 2.

Die Lichtwellenleiter 11 und 12 sowie der Umlenkkörper 15 sind zweckmäßigerweise mit einer glatten Oberfläche ausgebildet, um eine einfache Reinigung zu gewährleisten. Wie in Fig. 1 angedeutet, können die Oberflächen dieser Elemente, beispielsweise für eine bessere Lichtwellenleitung, auch mit einer Oberflächenbeschichtung 80, beispielsweise mit einer Lackierung ausgebildet sein. Insbesondere kann eine weiße Lackierung vorgesehen sein.

## Patentansprüche

1. Vorsatz (1) zum Umrüsten eines für die Auswertung von Rückstrahllicht ausgebildeten Codelesegerätes (2), welches zumindest eine Lichtquelle (21) zum Bestrahlen eines Objekts (70) und eine Auswerteeinheit mit einer Auswerteoptik (24) zum Auslesen eines optischen Codefelds (71) auf dem Objekt (70) aufweist, für eine Durchlichtauswertung, bei der das Codefeld (71) durchleuchtet wird und das nach dem Durchtritt verbleibende Restlicht erfasst wird, wobei der Vorsatz aufweist:
- Anschlussmittel (60) zum Herstellen einer ausgerichteten Verbindung mit dem Codelesegerät (2),
- eine Umlenkeinrichtung (10), die dafür eingerichtet und positioniert ist, Licht umzulenken, welches bei angeschlossenem Codelesegerät (2) von der Lichtquelle (21) des Codelesegeräts (2) ausgeht, und
- einen Freiraum (19) zur Aufnahme zumindest des Codefelds (71),
- wobei die Umlenkeinrichtung (10) dafür eingerichtet und positioniert ist, Licht, welches bei angeschlossenem Codelesegerät (2) von der Lichtquelle (21) des Codelesegeräts (2) ausgeht, zur Auswerteoptik (24) des angeschlossenen Codelesegeräts (2) zurückzulenken, und
- wobei der Freiraum (19) so positioniert ist, dass er bei angeschlossenem Codelesegerät (2) zwischen der Umlenkeinrichtung (10) und der Auswerteoptik (24) liegt, so dass das Codefeld (71) mit Licht durchleuchtet wird, welches aus der Umlenkeinrichtung (10) austritt, oder wobei der Freiraum (19) so positioniert ist, dass er bei angeschlossenem Codelesegerät (2) zwischen der Lichtquelle (21) und der Umlenkeinrichtung (10) liegt, so dass in die Umlenkeinrichtung (10) eintretendes Licht Informationen über das durchleuchtete Codefeld (71) enthält.

2. Vorsatz (1) nach Anspruch 1,
**dadurch gekennzeichnet,**
**dass** die Umlenkeinrichtung (10) dafür eingerichtet und positioniert ist, Licht, welches bei angeschlossenem Codelesegerät (2) von der Lichtquelle (21) des Codelesegeräts (2) ausgeht, für die Durchlichtauswertung des Codefelds (71) um 180° umzulenken.

3. Vorsatz (1) nach einem der vorstehenden Ansprüche,
**dadurch gekennzeichnet,**
**dass** die Umlenkeinrichtung (10) zumindest einen Lichtwellenleiter (11, 12), insbesondere aus Plexiglas, aufweist.

4. Vorsatz (1) nach einem der vorstehenden Ansprüche,
**dadurch gekennzeichnet,**
**dass** die Umlenkeinrichtung (10) zumindest zwei parallel verlaufende Lichtwellenleiter (11, 12) aufweist,
wobei ein erster Lichtwellenleiter (11) zur Übertragung von Licht eingerichtet und positioniert ist, welches von der Lichtquelle (21) des angeschlossenen Codelesegeräts (2) abgestrahlt wird,
wobei ein zweiter Lichtwellenleiter (12) zur Übertragung von Licht eingerichtet und positioniert ist, welches zur Auswerteoptik (24) des angeschlossenen Codelesegeräts (2) zurückgelenkt ist, und
wobei die beiden Lichtwellenleiter (11, 12) über einen optischen Umlenkkörper (15) verbunden sind.

5. Vorsatz (1) nach Anspruch 4,
**dadurch gekennzeichnet,**
**dass** die beiden Lichtwellenleiter an ihren Seitenflächen aneinander anliegen.

6. Vorsatz (1) nach einem der Ansprüche 3 bis 5,
**dadurch gekennzeichnet,**
**dass** zumindest einer der Lichtwellenleiter (11) plattenförmig ausgebildet ist.

7. Vorsatz (1) nach einem der Ansprüche 3 bis 6,
**dadurch gekennzeichnet,**
**dass** zumindest einer der Lichtwellenleiter (11) lichteingangsseitig eine Abdeckung (31) zum Abschirmen von Auskoppellicht aufweist.

8. Vorsatz (1) nach einem der vorstehenden Ansprüche,
**dadurch gekennzeichnet,**
**dass** die Umlenkeinrichtung (10) einen als Halbzylinder ausgebildeten optischen Umlenkkörper (15), insbesondere aus Plexiglas, aufweist.

9. Vorsatz (1) nach einem der vorstehenden Ansprüche,
**dadurch gekennzeichnet,**
**dass** die Umlenkeinrichtung (10) lichtausgangsseitig einen Diffusor (17) aufweist.

10. Vorsatz (1) nach einem der vorstehenden Ansprüche,
**dadurch gekennzeichnet,**
**dass** er zumindest ein optisches Element (14) aufweist, welches so positioniert ist, dass es bei angeschlossenem Codelesegerät (2) vor der Auswerteoptik (24) des Codelesegeräts (2) angeordnet ist.

11. Vorsatz (1) nach einem der vorstehenden Ansprüche,
**dadurch gekennzeichnet,**
**dass** zumindest eine Abdeckung (32) zum Abdecken zumindest einer nicht benötigten Lichtquelle (21') des Codelesegeräts (2) vorgesehen ist.

12. Vorsatz (1) nach einem der vorstehenden Ansprüche,
**dadurch gekennzeichnet,**
**dass** die Anschlussmittel (60) eine hülsenförmige Aufnahme für das Codelesegerät (2) aufweisen.

13. Vorsatz (1) nach einem der vorstehenden Ansprüche,
**dadurch gekennzeichnet,**
**dass** die Anschlussmittel (60) eine L-winkelförmige Auflage (61) für das Codelesegerät (2) sowie zumindest eine Schraube zum Sichern des Codelesegeräts (2) an der Auflage (61) aufweisen.

14. Für die Auswertung von Rückstrahllicht ausgebildetes Codelesegerät (2), welches zumindest eine Lichtquelle (21) zum Bestrahlen eines Objekts (70) und eine Auswerteeinheit mit einer Auswerteoptik (24) zum Auslesen eines optischen Codefelds (71) auf dem Objekt (70) aufweist, **dadurch gekennzeichnet, dass** es mit einem Vorsatz (1) nach einem der vorstehenden Ansprüche verbunden ist.

15. Verfahren zum Auslesen eines optischen Codefelds (71) an einer transparenten Wand eines Objekts (70), insbesondere eines Gefäßes, mittels eines Codelesegeräts (2) mit einem Vorsatz (1) nach Anspruch 14 bei dem
- von der Lichtquelle (21) des Codelesegeräts (2) ausgehendes Licht durch die Wand des Objekts und durch das optische Codefeld (71) hindurch auf die Auswerteoptik (24) der Auswerteeinrichtung des Codelesegeräts (2) gestrahlt wird, und
- das optische Codefeld (71) von der Auswerteeinrichtung auf Grundlage von Licht, welches durch das optische Codefeld (71) hindurchtritt, ausgewertet wird.

16. Verfahren nach Anspruch 15,
**dadurch gekennzeichnet,**
**dass** das von der Lichtquelle (21) des Codelesegeräts (2) ausgehende Licht mittels einer Umlenkeinrichtung (10) zum optischen Codefeld (71) und zur Auswerteoptik (24) des Codelesegeräts (2) zurückgelenkt wird.

## Claims

1. An adapter (1) to be fitted to a code reader (2), which code reader is adapted for evaluation of reflected light and comprises at least one light source (21) for illumination of an object (70) and further comprises an evaluation unit having an optical evaluating system (24) for reading an optical code field (71) on said object (70), for the purpose of performing transmitted-light evaluation involving transillumination of said code field (71) and measurement of the residual light remaining after passing therethrough,
which adapter comprises:
- connecting means (60) for establishing an oriented connection with said code reader (2),
- a deflection device (10) adapted and positioned for deflecting the light emitted by said light source (21) pertaining to said code reader (2) when said code reader (2) is attached, and
- a free space (19) for the accommodation of at least said code field (71),
- said deflection device (10) being adapted and positioned to deflect the light emitted by said light source (21) pertaining to said code reader (2), when said code reader (2) is attached, back to said optical evaluating system (24) pertaining to said attached code reader (2), and
- wherein said free space (19) is positioned such that it is disposed between said deflection device (10) and said optical evaluating system (24) when said code reader (2) is attached, such that said code field (71) is transilluminated by light coming from said deflection device (10), or said free space (19) is positioned such that it is disposed between said light source (21) and said deflection device (10), when said code reader (2) is attached, such that light entering said deflection device (10) contains information concerning said transilluminated code field (71).

2. The adapter (1) as defined in claim 1,
**characterized in that**
said deflection device (10) is adapted and positioned so as to deflect the light coming from said light source (21) pertaining to said code reader (2), when said code reader (2) is attached, through an angle of 180 ° for the purpose of performing transmitted-light evaluation of said code field (71).

3. The adapter (1) as defined in any one of the previous claims, **characterized in that**
said deflection device (10) comprises at least one optical waveguide (11, 12), more particularly one made of Plexiglass.

4. The adapter (1) as defined in any one of the previous claims, **characterized in that**
said deflection device (10) comprises at least two optical waveguides (11, 12) running parallel to each other,
a first optical waveguide (11) being adapted and positioned for the transfer of the light emitted by said light source (21) pertaining to said attached code reader (2), and a second optical waveguide (12) being adapted and positioned for the transfer of the light deflected back to said optical evaluating system (24) pertaining to said attached code reader (2), said two optical waveguides (11, 12) being connected via an optical deflecting element (15).

5. The adapter (1) as defined in claim 4,
**characterized in that**
the end faces of said two optical waveguides abut each other.

6. The adapter (1) as defined in any one of claims 3 to 5,
**characterized in that**
at least one of said optical waveguides (11) is in the form of a plate.

7. The adapter (1) as defined in any one of claims 3 to 6,
**characterized in that**
at least one of said optical waveguides (11) has a cover (31) on its light-input side to shield it from decoupled light.

8. The adapter (1) as defined in any one of the previous claims,
**characterized in that**
said deflection device (10) has a hemicylindrical optical deflecting element (15), more particularly one made of Plexiglass.

9. The adapter (1) as defined in any one of the previous claims,
**characterized in that**
said deflection device (10) has a diffuser (17) on its light-output side.

10. The adapter (1) as defined in any one of the previous claims,
**characterized in that**
it comprises at least one optical element (14) that is positioned such that it is disposed upstream of said optical evaluating system (24) pertaining to said code reader (2) when said code reader (2) is attached.

11. The adapter (1) as defined in any one of the previous claims,
**characterized in that**
at least one cover (32) is provided for the purpose of shielding off at least one unneeded light source (21') pertaining to said code reader (2).

12. The adapter (1) as defined in any one of the previous claims,
**characterized in that**
said connecting means (60) include sleeve-shaped accommodating means for said code reader (2).

13. The adapter (1) as defined in any one of the previous claims,
**characterized in that**
said connecting means (60) include an L-shaped support (61) for said code reader (2) and also at least one screw for securing said code reader (2) to said support (61).

14. A code reader (2) adapted to evaluate reflected light,
comprising at least one light source (21) for illumination of an object (70) and further comprising an evaluation unit having an optical evaluating system (24) for reading an optical code field (71) on said object (70),
**characterized in that**
it is attached to an adapter (1) as defined in any one of the previous claims.

15. A method for reading an optical code field (71) on a transparent wall of an object (70), more particularly of a vessel, by means of a code reader (2) equipped with an adapter (1) as defined in claim 14,
- in which the light emitted by said light source (21) pertaining to said code reader (2) is passed through the wall of said object and through said optical code field (71) onto said optical evaluating system (24) of said evaluation system pertaining to said code reader (2), and
- said optical code field (71) is evaluated by said evaluation system on the basis of the light that passes through said optical code field (71).

16. The method as defined in claim 15,
**characterized in that**
the light emitted by said light source (21) pertaining to said code reader (2) is deflected by means of a deflection device (10) back to said optical code field (71) and to said optical evaluating system (24) pertaining to said code reader (2).

## Revendications

1. Adaptateur (1) pour équiper un appareil (2) de lecture de codes conformé pour analyser une lumière réfléchie, qui comprend au moins une source lumineuse (21) pour irradier un objet (70) et une unité d'analyse avec une optique d'analyse (24) pour lire une zone (71) de code optique sur l'objet (70), pour une analyse de lumière transmise dans laquelle la zone (71) de code est éclairée en transmission et la lumière résiduelle restant après la traversée est détectée, l'adaptateur comprenant :
- des moyens de raccordement (60) pour établir une liaison orientée avec l'appareil (2) de lecture de codes,
- un dispositif de déviation (10) qui est configuré et agencé pour dévier la lumière qui sort de la source lumineuse (21) de l'appareil (2) de lecture de codes quand l'appareil (2) de lecture de codes est raccordé, et
- un espace libre (19) destiné à accueillir au moins la zone (71) de code,
- dans lequel le dispositif de déviation (10) est configuré et positionné pour renvoyer vers l'optique d'analyse (24) de l'appareil (2) de lecture de codes raccordé, la lumière qui vient de la source lumineuse (21) de l'appareil (2) de lecture de codes lorsque l'appareil (2) de lecture de codes est raccordé, et
- dans lequel l'espace libre (19) est positionné de telle sorte qu'il se trouve entre le dispositif de déviation (10) et l'optique d'analyse (24) lorsque l'appareil (2) de lecture de codes est raccordé, de façon que le champ de code (71) soit traversé par de la lumière qui sort du dispositif de déviation (10), ou dans lequel l'espace libre (19) est positionné de telle manière que, lorsque l'appareil (2) de lecture de codes est raccordé, il se trouve entre la source lumineuse (21) et le dispositif de déviation (10), de façon que la lumière pénétrant dans le dispositif de déviation (10) contienne des informations sur la zone (71) de code éclairée.

2. Adaptateur (1) selon la revendication 1,
***caractérisé en ce que***
le dispositif de déviation (10) est configuré et positionné pour dévier de 180°, en vue de l'analyse en transmission de la zone (71) de code, la lumière qui vient de la source lumineuse (21) de l'appareil (2) de lecture de codes lorsque l'appareil (2) de lecture de codes est raccordé.

3. Adaptateur (1) selon l'une quelconque des revendications précédentes,
***caractérisé en ce que***
le dispositif de déviation (10) comprend au moins un conducteur optique (11, 12), en particulier en plexiglas.

4. Adaptateur (1) selon l'une quelconque des revendications précédentes,
***caractérisé en ce que***
le dispositif de déviation (10) comprend au moins deux conducteurs optiques (11, 12) s'étendant parallèlement,
dans lequel un premier conducteur optique (11) est configuré et positionné pour transmettre la lumière qui est émise par la source lumineuse (21) de l'appareil (2) de lecture de codes raccordé,
dans lequel un deuxième conducteur optique (12) est configuré et positionné pour transmettre la lumière qui est renvoyée vers l'optique d'analyse (24) de l'appareil (2) de lecture de codes raccordé, et
dans lequel les deux conducteurs optiques (11, 12) sont reliés par un corps de déviation optique (15).

5. Adaptateur (1) selon la revendication 4,
***caractérisé en ce que***
les deux conducteurs optiques se touchent l'un l'autre au niveau de leurs faces latérales.

6. Adaptateur (1) selon l'une quelconque des revendications 3 à 5,
***caractérisé en* ce *qu'***
au moins l'un des conducteurs optiques (11) est réalisé en forme de plaque.

7. Adaptateur (1) selon l'une quelconque des revendications 3 à 6,
***caractérisé en ce qu'***
au moins l'un des conducteurs optiques (11) comprend, du côté de l'entrée de lumière, un couvercle (31) pour arrêter la lumière sortante.

8. Adaptateur (1) selon l'une quelconque des revendications précédentes,
***caractérisé en ce que***
le dispositif de déviation (10) comprend un corps (15) de déviation optique conformé en demi-cylindre, en particulier en plexiglas.

9. Adaptateur (1) selon l'une quelconque des revendications précédentes,
***caractérisé en ce que***
le dispositif de déviation (10) comprend un diffuseur (17) du côté de la sortie de lumière.

10. Adaptateur (1) selon l'une quelconque des revendications précédentes,
***caractérisé en ce qu'***
il comprend au moins un élément optique (14) qui est positionné de telle manière qu'il se trouve avant l'optique d'analyse (24) de l'appareil (2) de lecture de codes lorsque l'appareil (2) de lecture de codes est raccordé.

11. Adaptateur (1) selon l'une quelconque des revendications précédentes,
***caractérisé en ce qu'***
au moins un couvercle (32) est prévu pour recouvrir au moins une source lumineuse (21') non utilisée de l'appareil (2) de lecture de codes.

12. Adaptateur (1) selon l'une quelconque des revendications précédentes,
***caractérisé en ce que***
les moyens de raccordement (60) comprennent un logement en forme de douille pour l'appareil (2) de lecture de codes.

13. Adaptateur (1) selon l'une quelconque des revendications précédentes,
***caractérisé en ce que***
les moyens de raccordement (60) comprennent un support (61) en forme de L pour l'appareil (2) de lecture de codes ainsi qu'au moins une vis pour immobiliser l'appareil (2) de lecture de codes sur le support (61).

14. Appareil (2) de lecture de codes pour analyser une lumière réfléchie, qui comprend au moins une source lumineuse (21) pour irradier un objet (70) et une unité d'analyse avec une optique d'analyse (24) pour lire une zone (71) de code optique sur l'objet (70),
***caractérisé en ce qu'***
il est relié à un adaptateur (1) selon l'une quelconque des revendications précédentes.

15. Procédé de lecture d'une zone (71) de code optique sur une paroi transparente d'un objet (70), en particulier d'un récipient, au moyen d'un appareil (2) de lecture de codes équipé d'un adaptateur selon la revendication 14, dans lequel
- la lumière venant de la source lumineuse (21) de l'appareil (2) de lecture de codes est envoyée à travers la paroi de l'objet et à travers la zone (71) de code optique en direction de l'optique d'analyse (24) du dispositif d'analyse de l'appareil (2) de lecture de codes, et
- la zone (71) de code optique est analysée par le dispositif d'analyse sur la base de la lumière qui traverse la zone (71) de code optique.

16. Procédé selon la revendication 15,
***caractérisé en ce que***
la lumière venant de la source lumineuse (21) de l'appareil (2) de lecture de codes est renvoyée au moyen d'un dispositif de déviation (10) en direction de la zone (71) de code optique et de l'optique d'analyse (24) de l'appareil (2) de lecture de codes.
